# FASCICULE DE BREVET EUROPEEN

(11) **EP 0 780 562 B1**
(45) Date de publication et mention de la délivrance du brevet: **27.03.2002**
(21) Numéro de dépôt: 96402727.0
(22) Date de dépôt: 13.12.1996
(51) Int. Cl.: F02K 1/72

(54) **Inverseur de poussée à tuyère à section réglable pour moteur d'avion à réaction**
Schubumkehr mit einer Düse mit veränderlichem Strahlquerschnitt für Flugzeugstrahltriebwerke
Jet engine thrust reverse with a variable exhaust area nozzle

(30) Priorité: 19.12.1995 FR 9515030
(43) Date de publication de la demande: 25.06.1997
(73) Titulaire: HUREL-HISPANO MEUDON, 92360 Meudon-la-Forêt (FR)
(72) Inventeur: Standish, Robert, 78120 Gazeran (FR); Laboure, Bernard, 78140 Velizy Villacoublay (FR)
(74) Mandataire: Sauvage, Renée

(56) Documents cités:
- EP-A- 0 043 764
- US-A- 3 020 712
- US-A- 3 036 431
- US-A- 3 797 785

## Description

La présente invention concerne un inverseur de poussée pour moteur à réaction à double flux. Plus particulièrement, elle se rapporte à un inverseur de poussée du type à portes basculantes représenté dans US-A-4 485 970 dont la déposante est cessionnaire.

Un inverseur de ce type est monté dans un capotage extérieur entourant la structure moteur et de même axe que celui-ci, ledit capotage délimitant avec la structure du moteur un canal annulaire pour la circulation d'un flux de gaz pulsé par un ventilateur d'une zone amont vers une zone aval du capotage, l'inverseur étant constitué par des portes basculantes disposées dans des ouvertures (ou puits) pratiquées dans ledit capotage et définies, en amont et en aval, par des parties fixes annulaires amont et aval du capotage et, latéralement, par des poutres longitudinales solidaires du capotage, lesdites portes étant articulées, dans la structure fixe du capotage, autour de pivots afin de pouvoir être déplacées, sous l'action d'une commande de basculement, entre une position escamotée, dans laquelle les portes obturent les ouvertures du capotage, et une position déployée dans laquelle lesdites portes bloquent la circulation du flux de gaz circulant dans le canal annulaire pour le dévier vers l'extérieur, aux fins de créer la poussée d'inversion.

La présente invention se propose d'améliorer l'inverseur décrit ci-dessus en augmentant sa sécurité de fonctionnement tout en améliorant les performances du moteur à réaction.

On sait, en effet, que les exigences de sécurité pour ce qui concerne les avions à réaction sont de plus en plus draconiennes. En particulier, pour les inverseurs à portes, il est demandé que des dispositions très efficaces soient prévues pour éviter tout déploiement intempestif des portes d'inverseur en vol, tout en maintenant des performances du moteur optimales. On est amené, pour répondre à ces exigences, à prévoir, outre le verrouillage des vérins de commande du basculement des portes, une série de verrous auxiliaires qui entraînent des complications structurelles et un accroissement de poids qui est contradictoire avec le maintien des performances du moteur.

L'invention propose un système simple et particulièrement efficace pour répondre aux conditions rappelées ci-dessus.

A cet, effet, l'inverseur selon l'invention se caractérise par le fait qu'une tuyère annulaire mobile en translation, susceptible de coulisser longitudinalement, parallèlement à l'axe X-X' du moteur, entre une position amont et une position aval, est logée à l'intérieur de la partie fixe annulaire aval du capotage, l'extrémité amont de la tuyère présentant un moyen de blocage qui, lorsque la tuyère est en position amont, est adapté à bloquer les portes basculantes en position escamotée, interdisant ainsi tout déploiement intempestif desdites portes, et qui, lorsque la tuyère est en position aval, cesse de bloquer les portes, permettant ainsi leur pivotement depuis leur position escamotée vers leur position déployée.

On obtient ainsi une interdiction d'ouverture des portes tandis qu'elles se trouvent en position escamotée, interdiction d'autant plus efficace que la tuyère coopère avec la partie arrière des portes, c'est-à-dire dans une zone éloignée des pivots de portes.

De façon avantageuse, la tuyère mobile en translation est montée coulissante dans des rails diamétralement opposés par rapport à l'axe X-X' du moteur, ces rails étant solidaires de la structure fixe du capotage. De plus, le coulissement de la tuyère est obtenu par un moyen de commande indépendant de la commande de basculement des portes basculantes.

Le moyen de blocage dont est munie la tuyère est constitué, selon une forme de réalisation préférée, par une partie de la tuyère coopérant avec une partie des portes basculantes, ce moyen de blocage pouvant être une jupe annulaire amont de la tuyère destinée à s'engager à l'intérieur d'une cavité pratiquée dans l'extrémité aval des portes basculantes, la longueur de la partie de la jupe coopérant avec ladite cavité étant inférieure à la course en translation vers l'aval de la tuyère, afin de permettre une libération complète des portes en fin de course de la tuyère.

Un avantage supplémentaire offert par l'inverseur selon l'invention réside dans le fait que la tuyère mobile en translation constitue une tuyère à section d'échappement variable. A cet effet, la surface interne de la tuyère mobile en translation est conique d'amont en aval, la section la plus étroite étant située à son extrémité aval. De la sorte, lorsque la tuyère est en position aval, la section d'échappement de tuyère, mesurée entre l'extrémité aval de la tuyère et la paroi externe de la structure moteur, est supérieure à la section d'échappement de tuyère lorsque la tuyère est en position amont.

On notera que, comme le déplacement de la tuyère est commandé de façon indépendante, on peut placer la tuyère en toute position intermédiaire souhaitée entre ses deux positions extrêmes. De cette manière, on a la possibilité de jouer sur le débit du flux de gaz.

On décrira à présent une forme de réalisation de l'invention à titre d'exemple non limitatif, en référence aux dessins annexés dans lesquels:
- la figure 1 est une vue en perspective de la partie arrière d'un moteur à réaction équipé d'un inverseur de poussée selon l'invention, dans laquelle la tuyère à section variable est en position amont extrême ;
- la figure 2 est une coupe schématique et partielle selon la ligne II-II de la figure 1.
- la figure 3 est une vue en perspective similaire à la figure 1, mais représentant la tuyère à section variable en position aval extrême ;
- la figure 4 est une coupe schématique et partielle selon la ligne IV-IV de la figure 3, montrant en outre, en trait interrompu, une porte d'inverseur en position d'inversion ; et
- la figure 5 est une demi-coupe transversale pratiquée selon la ligne V-V de la figure 1.

Dans l'exemple de réalisation représenté dans les dessins, on se réfère à un moteur à réaction monté sous voilure, mais on comprendra que l'invention s'applique également aux moteurs montés en nacelles latérales sur le fuselage De même, l'inverseur à portes représenté à titre d'illustration comporte quatre portes basculantes, mais l'invention concerne également les inverseurs ayant un nombre de portes différent, par exemple deux ou trois portes.

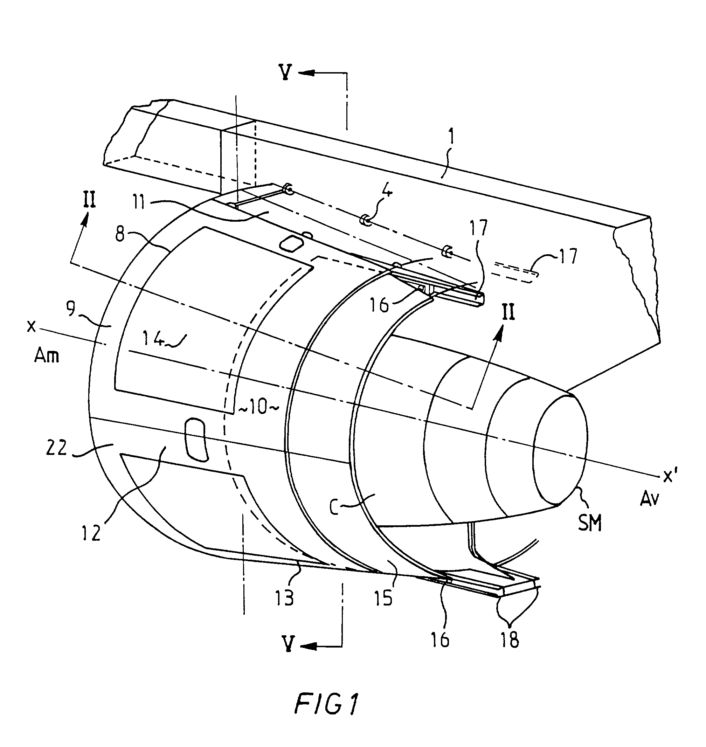

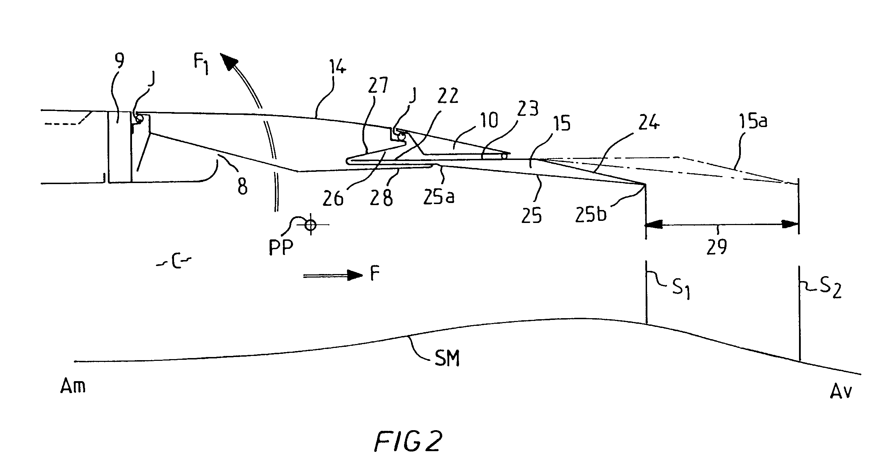

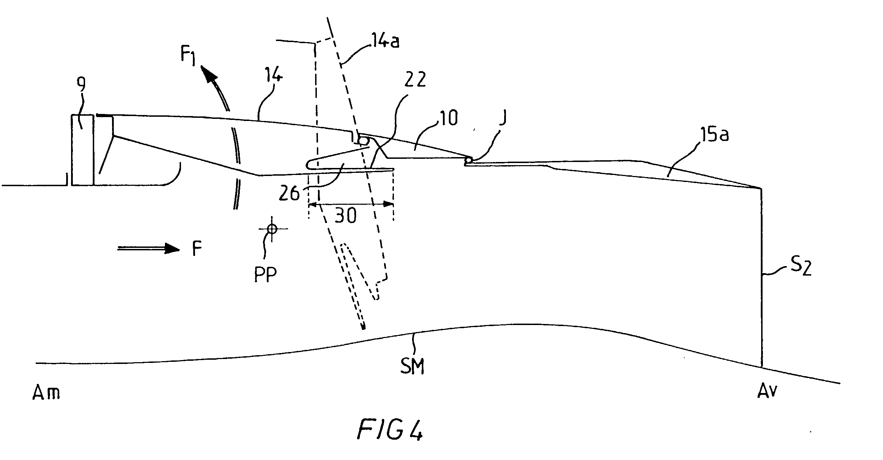

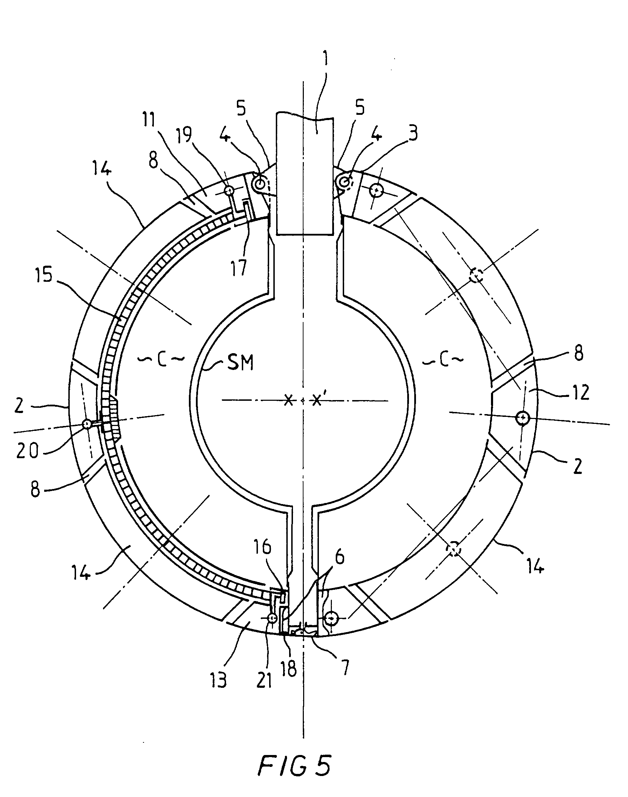

Comme ceci est bien connu, un moteur monté sous voilure est supporté, comme représenté aux figures 1 et 5, notamment, par un mât longitudinal 1 auquel est fixé, dans une chape 5 (figure 5), le capotage extérieur désigné de façon générale en 2. Ce capotage, sensiblement concentrique à l'axe longitudinal X-X' du moteur (non représenté) est constitué par deux demi-coquilles symétriques par rapport au plan vertical du moteur et articulées en 4 dans les chapes 5 du mât, afin de pouvoir s'ouvrir pour permettre l'accès aux organes tournants du moteur dans un but d'entretien. Des ferrures longitudinales supérieure 3 et inférieure 6 assurent la rigidité des demi-coquilles en permettant, d'une part, leur accrochage au mât 1 et, d'autre part, le verrouillage de leur extrémité inférieure par un système de crochets 7. De plus, aux ferrures 3 et 6 sont fixées les deux parties symétriques de l'enveloppe SM du groupe moteur qui sont ainsi solidaires des coquilles du capotage 2. Entre l'enveloppe SM et la paroi interne du capotage 2 est ménagé un canal C annulaire permettant la circulation d'un flux de gaz secondaire pulsé de l'amont vers l'aval du moteur, par un ventilateur situé à l'avant du moteur et non représenté. Cette circulation se fait selon la flèche F en position de croisière et selon la flèche F₁ en position d'inversion de poussée (figures 2 et 4).

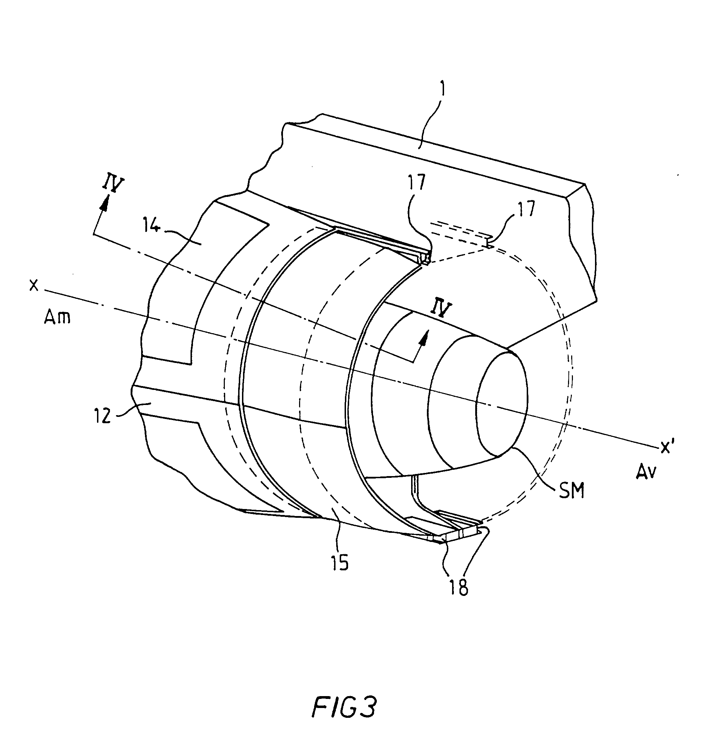

Comme le montre la figure 2, le capotage 2 présente, de façon connue, des ouvertures ou puits 8, ces ouvertures étant définies, en amont Am et en aval Av, par des structures continues annulaires 9 et 10 et, latéralement, par des poutres longitudinales 11, 12 et 13. Dans ces ouvertures 8 sont logées les portes d'inverseur 14 articulées entre les poutres longitudinales autour de pivots PP (voir figures 2 et 4). Les portes sont ainsi adaptées à basculer entre la position escamotée représentée en traits pleins aux figures 1 à 4 et la position déployée représentée en trait interrompu en 14a à la figure 4.

Comme on le voit particulièrement à la figure 5, à l'intérieur des demi-coquilles constituant le capotage 2 sont logés deux éléments symétriques semi-tubulaires formant ensemble une tuyère 15. Chaque élément de tuyère est monté par ses extrémités munies de galets 16, de façon à pouvoir coulisser longitudinalement et parallèlement à l'axe X-X', dans des rails supérieur 17 et inférieur 18, qui sont solidaires des ferrures 3 et 6. Le déplacement en translation de la tuyère est réalisé par des vérins 19, 20 et 21 logés dans les parties fixes 11, 12 et 13 du capotage.

En section longitudinale, comme représenté à la figure 2, la tuyère 15 présente une surface externe amont 23 sensiblement cylindrique, prolongée en aval par une surface 24 convergeant vers l'axe du moteur, cet agencement assurant, en position amont de la tuyère (comme à la figure 2), une continuité aérodynamique avec la surface extérieure du capotage. La paroi intérieure de la tuyère présente, de l'aval vers l'amont, une surface 25 conique prolongée, au point 25a, par un épaulement délimitant une surface en retrait parallèle à la surface externe 23, et constituant avec celle-ci une jupe cylindrique 22. On notera qu'avantageusement, le point 25a est plus éloigné de l'axe moteur X-X' que le point 25b situé à l'extrémité de la tuyère, celle-ci étant par conséquent une tuyère convergente.

La jupe 22 de la tuyère est destinée à coopérer, en position de croisière représentée à la figure 2, avec la partie arrière des portes basculantes 14 qui présentent une cavité 26 définie par une surface supérieure 27 inclinée et par une languette inférieure 28, la jupe 22 s'engageant entre la face 27 et la languette 28 pour assurer le blocage des portes en position escamotée.

On notera que la course 29 de déplacement en translation de la tuyère 15, entre ses deux positions extrêmes représentées respectivement en trait plein et en trait interrompu, 15a, à la figure 2, est supérieure à la longueur 30 (figure 4) de la jupe 22 et de la cavité 26, de telle manière qu'en position aval extrême de tuyère représentée plus clairement à la figure 4, l'ouverture des portes par passage en position déployée d'inversion puisse se faire sans aucune gêne.

On comprendra que, en agissant sur les vérins de commande 19, 20, 21 du coulissement de la tuyère, on peut régler la position de celle-ci comme on le désire et la placer dans toute position intermédiaire entre ses positions extrêmes. Elle peut ainsi jouer le rôle habituel d'une tuyère à section d'échappement variable. Cela est d'autant plus vrai que la forme de l'enveloppe SM de la structure moteur présente, comme on le voit sur les figures 2 et 4, notamment, un profil convergent. On constate alors que la section S2 de sortie de la tuyère en position aval est supérieure à la section S1 de sortie correspondant à la position amont. On obtient ainsi une amélioration des performances du moteur.

Sur les figures 2 et 4, on a représenté en J des joints d'étanchéité.

## Revendications

1. Inverseur de poussée pour moteur d'avion à réaction à double flux, monté dans un capotage extérieur (2) entourant la structure moteur (SM) et de même axe longitudinal (X-X') que celui-ci, ledit capotage (2) délimitant avec la structure moteur un canal annulaire (C) pour la circulation d'un flux de gaz pulsé par un ventilateur d'une zone amont (Am) vers une zone aval (Av) du capotage, ledit inverseur étant constitué par des portes basculantes (14) disposées dans des ouvertures (8) pratiquées dans ledit capotage (2) et définies, en amont et en aval, par des parties fixes annulaires amont (9) et aval (10) du capotage et, latéralement, par des poutres longitudinales (11, 12, 13) solidaires du capotage, lesdites portes (14) étant articulées, dans la structure constituée par lesdites parties fixes du capotage, autour de pivots (PP) afin de pouvoir être déplacées, sous l'action d'une commande de basculement, entre une position escamotée, dans laquelle les portes (14) obturent les ouvertures (8) du capotage, et une position déployée, dans laquelle lesdites portes (14) bloquent la circulation du flux de gaz circulant dans le canal annulaire (C) pour le dévier vers l'extérieur,
ledit inverseur étant **caractérisé en ce qu'**une tuyère annulaire mobile en translation (15), susceptible de coulisser longitudinalement, parallèlement à l'axe (X-X') du moteur, entre une position amont et une position aval, est logée à l'intérieur de la partie fixe annulaire aval (10) du capotage (2), l'extrémité amont de la tuyère (15) présentant un moyen de blocage (22) qui, lorsque la tuyère (15) est en position amont, est adapté à bloquer les portes basculantes (14) en position escamotée, interdisant ainsi tout déploiement intempestif desdites portes, et qui, lorsque la tuyère (15) est en position aval cesse de bloquer les portes (14), permettant ainsi leur basculement pour les faire passer de leur position escamotée à leur position déployée.

2. Inverseur selon la revendication 1, **caractérisé en ce que** la tuyère mobile en translation (15) est montée coulissante dans des rails (17-18) diamétralement opposés par rapport à l'axe (X-X') du moteur, ces rails étant solidaires de la structure fixe (11-13) du capotage (2).

3. Inverseur selon la revendication 1 ou 2, **caractérisé en ce que** le coulissement de la tuyère (15) est obtenu par un moyen de commande (19, 20, 21) indépendant de la commande de basculement des portes basculantes (14).

4. Inverseur selon l'une quelconque des revendications 1 à 3, **caractérisé en ce que** le moyen de blocage (22) dont est munie la tuyère (15) est constitué par une partie de celle-ci coopérant avec une partie (27, 28) des portes basculantes (14).

5. Inverseur selon l'une quelconque des revendications 1 à 4, **caractérisé en ce que** ledit moyen de blocage est constitué par une jupe annulaire (22) destinée à s'engager à l'intérieur d'une cavité (26) pratiquée à l'intérieur de l'extrémité aval des portes basculantes (14), la longueur (30) de la partie de la jupe (22) coopérant avec ladite cavité (26) étant inférieure à la course (29) en translation vers l'aval de la tuyère.

6. Inverseur selon l'une quelconque des revendications précédentes, **caractérisé en ce que** la tuyère mobile en translation (15) constitue une tuyère à section d'échappement variable.

7. Inverseur selon l'une quelconque des revendications 1 à 6, **caractérisé en ce que** la surface interne (25) de la tuyère mobile en translation est conique d'amont en aval, la section la plus étroite (25b) étant située à son extrémité aval.

8. Inverseur selon l'une quelconque des revendications précédentes, **caractérisé en ce que**, en position aval de tuyère , la section d'échappement (S₂) de la tuyère, mesurée entre l'extrémité aval de la tuyère (15) et la paroi externe (SM) de la structure moteur, est supérieure à la section d'échappement (S₁) de tuyère lorsque la tuyère est en position amont.

## Claims

1. Thrust reverser for a bypass-type aircraft jet engine, mounted in an outer cowling (2) surrounding the engine structure (SM) and having the same longitudinal axis (X-X') thereas, the said cowling (2) defining with the engine structure an annular duct (C) through which a stream of gas pushed by a fan can flow from an upstream region (Am) towards a downstream region (Av) of the cowling, the said reverser consisting of pivoting doors (14) arranged in openings (8) made in the said cowling (2) and defined, upstream and downstream, by upstream (9) and downstream (10) annular fixed parts of the cowling and, at the sides, by longitudinal beams (11, 12, 13) integral with the cowling, the said doors (14) being articulated, in the structure consisting of the said fixed parts of the cowling, about pivots (PP) so that they can be moved, under the action of a command to pivot, between a stowed position in which the doors (14) close off the openings (8) in the cowling, and a deployed position in which the said doors (14) block the flow of the stream of gas flowing in the annular duct (C) in order to deflect it outwards, the said reverser being **characterized in that** a translating annular nozzle (15), capable of sliding longitudinally, parallel to the axis (X-X') of the engine, between an upstream position and a downstream position, is housed inside the downstream annular fixed part (10) of the cowling (2), the upstream end of the nozzle (15) having an immobilizing means (22) which, when the nozzle (15) is in the upstream position, can immobilize the pivoting doors (14) in the stowed position, thus preventing any inadvertent deployment of the said doors and which, when the nozzle (15) is in the downstream position, ceases to immobilize the doors (14), thus allowing them to be pivoted from their stowed position to their deployed position.

2. Thrust reverser according to Claim 1, **characterized in that** the translating nozzle (15) is mounted so that it can slide in rails (17-18) which are diametrically opposed with respect to the axis (X-X') of the engine, these rails being integral with the fixed structure (11-13) of the cowling (2).

3. Thrust reverser according to Claim 1 or 2, **characterized in that** the nozzle (15) is made to slide by a command means (19, 20, 21) independent of the pivot command for the pivoting doors (14).

4. Thrust reverser according to any one of Claims 1 to 3, **characterized in that** the immobilizing means (22) with which the nozzle (15) is equipped consists of part thereof which interacts with part (27, 28) of the pivoting doors (14).

5. Thrust reverser according to any one of Claims 1 to 4, **characterized in that** the said immobilizing means consists of an annular skirt (22) intended to fit inside a cavity (26) made inside the downstream end of the pivoting doors (14), the length (30) of that part of the skirt (22) which interacts with the said cavity (26) being shorter than the downstream translational travel (29) of the nozzle.

6. Thrust reverser according to any one of the preceding claims, **characterized in that** the translating nozzle (15) constitutes a nozzle of variable exhaust section.

7. Thrust reverser according to any one of Claims 1 to 6, **characterized in that** the internal surface (25) of the translating nozzle is conical from the upstream towards the downstream end, the narrowest section (25b) being situated at its downstream end.

8. Thrust reverser according to any one of the preceding claims, **characterized in that** when the nozzle is in the downstream position, the exhaust section (S2) thereof, measured between the downstream end of the nozzle (15) and the external wall (SM) of the engine structure, is greater than the exhaust section (S1) of the nozzle when it is in the upstream position.

## Patentansprüche

1. Schubumkehrvorrichtung für ein Flugzeug-Zweistromstrahltriebwerk, die in einer äußeren Verkleidung (2) angeordnet ist, die den Motorkörper (SM) umgibt und dieselbe Längsachse (X-X') wie dieser hat, wobei diese Verkleidung (2) mit dem Motorkörper einen ringförmigen Kanal (C) für die Zirkulation eines durch einen Ventilator gepulsten Gasstroms von einer stromauf gelegenen Zone (Am) zu einer stromab gelegenen Zone (Av) der Verkleidung abgrenzt, wobei diese Umkehrvorrichtung aus verschwenkbaren Türen (14) besteht, die in Öffnungen (8) angeordnet sind, die in der Verkleidung (2) vorgesehen sind und stromauf und stromab durch feststehende ringförmige stromauf (9) und stromab (10) gelegene Teile der Verkleidung und seitlich durch mit der Verkleidung fest verbundene Längsträger (11, 12, 13) abgegrenzt sind, wobei die Türen (14) in der von diesen feststehenden Teilen der Verkleidung gebildeten Struktur an Drehzapfen (PP) angelenkt sind, um unter der Einwirkung einer Schwenkbetätigung zwischen einer versenkten Stellung, in der die Türen (14) die Öffnungen (8) der Verkleidung verschließen, und einer ausgefahrenen Stellung bewegt werden zu können, in der die Türen (14) die Zirkulation des in dem ringförmigen Kanal (C) strömenden Gasstroms blockieren, um ihn nach außen abzulenken,
wobei diese Umkehrvorrichtung **dadurch gekennzeichnet ist, dass** eine translationsbewegliche ringförmige Düse (15), die in Längsrichtung parallel zur Achse (X-X') des Motors zwischen einer stromauf gelegenen Stellung und einer stromab gelegenen Stellung verschiebbar ist, in das Innere des stromab gelegenen feststehenden ringförmigen Teils (10) der Verkleidung (2) eingesetzt ist, wobei das stromauf gelegene Ende der Düse (15) ein Blockiermittel (22) aufweist, das, wenn die Düse (15) in der stromauf gelegenen Stellung ist, dafür ausgelegt ist, die verschwenkbaren Türen (14) in der versenkten Stellung zu blockieren und auf diese Weise jedes ungewünschtes Ausfahren der Türen zu verhindern, und das, wenn die Düse (15) in der stromab gelegenen Stellung ist, aufhört, die Türen (14) zu blockieren, und dadurch ihr Verschwenken gestatten, um sie von ihrer versenkten Stellung in ihre ausgefahrene Stellung übergehen zu lassen.

2. Umkehrvorrichtung nach Anspruch 1, **dadurch gekennzeichnet, dass** die translationsbewegliche Düse (15) in bezüglich der Achse (X-X') des Motors diametral einander entgegengesetzten Schienen (17-18) verschiebbar montiert ist, die mit der festen Struktur (11-13) der Verkleidung (2) fest verbunden sind.

3. Umkehrvorrichtung nach Anspruch 1 oder 2, **dadurch gekennzeichnet, dass** die Verschiebung der Düse (15) durch ein Betätigungsmittel (19, 20, 21) erhalten wird, das von der Schwenkbetätigung der verschwenkbaren Türen (14) unabhängig ist.

4. Umkehrvorrichtung nach einem der Ansprüche 1 bis 3, **dadurch gekennzeichnet, dass** das Blockiermittel (22), mit dem die Düse (15) versehen ist, aus einem Teil dieser Düse besteht, der mit einem Teil (27, 28) der verschwenkbaren Türen (14) zusammenwirkt.

5. Umkehrvorrichtung nach einem der Ansprüche 1 bis 4, **dadurch gekennzeichnet, dass** das Blockiermittel aus einem ringförmigen Mantelrohrteil (22) besteht, der dazu bestimmt ist, in das Innere eines Hohlraums (26) einzutreten, der im Inneren des stromab gelegenen Endes der verschwenkbaren Türen (14) vorgesehen ist, wobei die Länge (30) des mit diesem Hohlraum (26) zusammenwirkenden Teils des Mantelrohrteils (22) kleiner als der Translationshub (29) der Düse stromabwärts ist.

6. Umkehrvorrichtung nach einem der vorhergehenden Ansprüche, **dadurch gekennzeichnet, dass** die translationsbewegliche Düse (15) eine Düse mit sich änderndem Auslassquerschnitt bildet.

7. Umkehrvorrichtung nach einem der Ansprüche 1 bis 6, **dadurch gekennzeichnet, dass** die Innenfläche (25) der translationsbeweglichen Düse von stromauf nach stromab konisch ist, wobei der engste Querschnitt (25b) an ihrem stromab gelegenen Ende liegt.

8. Umkehrvorrichtung nach einem der vorhergehenden Ansprüche, **dadurch gekennzeichnet**, der Auslassquerschnitt (S₂) der Düse, zwischen dem stromab gelegenen Ende der Düse (15) und der Außenwand (SM) des Motorkörpers gemessen, in der stromab gelegenen Stellung der Düse größer als der Auslassquerschnitt (S₁) der Düse in ihrer stromauf gelegenen Stellung ist.
